# EUROPÄISCHE PATENTSCHRIFT

(11) **EP 2 665 952 B1**
(45) Veröffentlichungstag und Bekanntmachung des Hinweises auf die Patenterteilung: **29.07.2015**
(21) Anmeldenummer: 12701317.5
(22) Anmeldetag: 17.01.2012
(51) Int. Cl.: F16J 15/34

(54) **GLEITRINGDICHTUNGSANORDNUNG MIT FEDERRINGSCHEIBE**
SLIDE RING SEAL ARRANGEMENT WITH SPRING WASHER
ENSEMBLE D'ÉTANCHÉITÉ À BAGUES DE GLISSEMENT MUNI D'UNE RONDELLE-RESSORT

(30) Priorität: 19.01.2011 DE 102011008927
(43) Veröffentlichungstag der Anmeldung: 27.11.2013
(73) Patentinhaber: Carl Freudenberg KG, 69469 Weinheim (DE)
(72) Erfinder: WERDECKER, Ferdinand, 82432 Walchensee (DE); FESL, Andreas, 83624 Otterfing (DE); KELLER, Thomas, 82538 Geretsried (DE); FEIGL, Peter, 82335 Höhenrain (DE)
(86) Internationale Anmeldenummer: PCT/EP2012/000198
(87) Internationale Veröffentlichungsnummer: WO 2012/097977

(56) Entgegenhaltungen:
- FR-A- 1 406 037
- GB-A- 326 728
- US-A- 3 953 038

## Beschreibung

Die vorliegende Erfindung betrifft eine Gleitringdichtungsanordnung mit einem rotierenden und einem stationären Gleitring sowie einer Federringscheibe als Vorspannvorrichtung für wenigstens einen der Gleitringe.

Aus der FR 1 406 037 A, dass den nächstliegenden Stand der Technik repräsentiert, und der GB 326 728 A sind bereits Gleitringdichtungsanordnungen mit Federringscheiben bekannt. Die US 3,953,038 A offenbart eine Federringscheibe mit einem Federsteg, der in einem Eingriffsbereich eines Gehäuses aufgenommen ist.

Gleitringdichtungsanordnungen sind aus dem Stand der Technik in unterschiedlichen Ausgestaltungen bekannt. Hierbei wird eine Befederung eines Gleitrings dazu verwendet, eine für die Gleitfläche benötigte Schließkraft bereitzustellen, ohne die eine Gleitringdichtung bei fehlender Druckbelastung öffnen würde. Ein Beispiel einer derartigen Vorspanneinrichtung ist aus der DE 20 2008 011 032 U1 bekannt, bei der mehrere, am Umfang verteilte zylindrische Schraubenfedern eine Vorspannkraft auf einen Druckübertragungsring ausüben, welcher mit dem Gleitring in Kontakt ist. Hierdurch wird die notwendige axiale Vorspannkraft aufgebracht. Zur Aufnahme der Schraubenfedern sind jedoch eine Vielzahl von Taschen bzw. Aufnahmen notwendig, wodurch eine Herstellung der Gleitringdichtung verteuert wird. Ferner ergibt sich bei Vorspanneinrichtungen, welche am rotierenden Gleitring angeordnet sind, zusätzlich noch die Möglichkeit eines Verschleißes aufgrund von Relativbewegungen zwischen dem rotierenden Gleitring und Drehmomentstiften, welche eine Rotation auf den Gleitring übertragen.

Es ist daher Aufgabe der vorliegenden Erfindung, eine Gleitringdichtungsanordnung bereitzustellen, welche bei einfachem Aufbau und einfacher, kostengünstiger Herstellbarkeit eine verbesserte Befederung von Gleitringen ermöglicht.

Diese Aufgabe wird durch eine Gleitringdichtungsanordnung mit den Merkmalen des Anspruchs 1 gelöst, die Unteransprüche zeigen bevorzugte Weiterbildungen der Erfindung.

Die erfindungsgemäße Gleitringdichtungsanordnung mit den Merkmalen des Anspruchs 1 weist als Vorspanneinheit eine Federringscheibe mit wenigstens einem Federsteg und einem an einem freien Ende des Federstegs angeordneten Eingriffsbereich auf. Die Federstege verlaufen in Umfangsrichtung der Federringscheibe. Der Federsteg ist mit einem Basiskörper der Federringscheibe verbunden und stellt eine Federkraft in axialer Richtung der Gleitringdichtungsanordnung bereit. Der Eingriffsbereich der Federringscheibe befindet sich dabei mit einer am Gleitring vorgesehenen Ausnehmung im Eingriff, um eine in Axialrichtung wirkende Vorspannkraft auf den Gleitring auszuüben. Erfindungsgemäß ist somit lediglich ein einziges Bauteil als Vorspannvorrichtung notwendig, welches sehr kostengünstig und einfach herstellbar ist. Ferner kann durch die erfindungsgemäße Federringscheibe insbesondere auch eine axiale Baulänge der Gleitringdichtungsanordnung signifikant verkürzt werden, da die erfindungsgemäße Fedeningscheibe nur eine relativ kleine Dicke in axialer Richtung aufweist.

An der Federringscheibe sind eine erste Gruppe von Federstegen und eine zweite Gruppe von Federstegen vorgesehen. Dabei ist die erste Gruppe von Federstegen in eine erste Umfangsrichtung an der Federringscheibe gerichtet und die zweite Gruppe von Federstegen ist in die entgegengesetzte zweite Umfangsrichtung gerichtet.

Bevorzugt sind die geometrischen Ausgestaltungen der Federstege beider Gruppen dabei gleich. Durch diese Ausgestaltung der Federringscheibe mit zwei Gruppen von Federstegen ist eine Verwendung der Erfindung bei Anwendungen möglich, bei welchen eine Drehrichtung eines rotierenden Bauteils während des Betriebes umgekehrt wird. Insbesondere verhindern die Eingriffsbereiche der Federstege dabei eine unerwünschte Mitnahme des stationären Gleitrings in beiden Drehrichtungen.

Besonders bevorzugt ist die Federringscheibe ein einstückiges Bauteil, insbesondere ein Stanz-Biege-Bauteil, vorzugsweise aus Federstahl. Hierdurch kann die Federringscheibe sehr kostengünstig hergestellt werden und auch eine Montage der Federringscheibe ist sehr einfach möglich. Vorzugsweise sind die Federstege leicht zu einer Ebene, in welcher die Federringscheibe liegt, abgewinkelt.

Weiter bevorzugt ist die Ausnehmung am Gleitring an einem Außenumfang des Gleitrings ausgebildet. Hierdurch kann ein Hauptkörper des Gleitrings frei von Bohrungen oder Ausnehmungen oder dgl. sein und der Eingriffsbereich der Federringscheibe greift in die am Außenumfang gebildete Ausnehmung. Die Ausnehmung am Außenumfang des Gleitrings ist vorzugsweise eine in Axialrichtung des Gleitrings verlaufende Nut, vorzugsweise eine durchgehender Nut.

Gemäß einer weiteren bevorzugten Ausgestaltung der Erfindung umfasst die Federringscheibe eine Vielzahl von Federstegen mit Eingriffsbereichen, besonders bevorzugt drei oder vier Federstege. Hierdurch kann eine über den Umfang des Gleitrings gleichmäßige Vorspannkrafteinleitung in den Gleitring erfolgen.

Weiter bevorzugt weist der Federsteg eine gestufte Federwirkung auf. Die gestufte Federwirkung kann beispielsweise erst bei einer vorgegebenen definierten Temperatur bereitgestellt werden. Hierzu ist der Federsteg z.B. aus einem Memory-Metall hergestellt, welches bei Erreichen einer vorbestimmten Temperatur seine Federeigenschaften ändert.

Um möglichst kostengünstig Federringscheiben mit unterschiedlichen Federungseigenschaften bereitzustellen, weist vorzugsweise der Federsteg eine Beschichtung auf, wobei die Beschichtung eine Teilbeschichtung, d.h. eine teilweise Beschichtung, oder eine Vollbeschichtung sein kann, und/oder es werden Federstege mit unterschiedlicher Breite vorgesehen und/oder es werden Federstege mit unterschiedlicher Umfangslänge vorgesehen. Durch die vorhergehend beschriebenen Maßnahmen kann eine individuelle Einstellung der gewünschten Vorspannkraft der Vorspanneinrichtung bereitgestellt werden, wobei bei einer Vielzahl von Federstegen auch einzelne Federstege unterschiedlich ausgebildet sein können. Weiterhin kann auch durch eine unterschiedliche Materialauswahl der Federstege eine unterschiedliche Vorspannkraft erreicht werden.

Weiter bevorzugt ist zwischen dem Eingriffsbereich am Federsteg und der Ausnehmung am Gleitring eine formschlüssige Verbindung vorhanden. Hierdurch wird ein Spiel zwischen dem Eingriffsbereich und der Ausnehmung vermieden, so dass im Betrieb kein Verschleiß an der formschlüssigen Verbindung auftreten kann. Ferner kann dann bei Verwendung der Vorspannvorrichtung am rotierenden Gleitring neben der Vorspannfunktion zusätzlich noch eine Drehmomentübertragung sicher und verlustfrei von einem rotierenden Bauteil über die Vorspannvorrichtung auf den rotierenden Gleitring ermöglicht werden. Ein weiterer Vorteil hierbei ist, dass die formschlüssige Verbindung beide Drehrichtungen am rotierenden Gleitring zulässt, ohne dass dadurch ein zusätzlicher Aufwand notwendig wäre. Hierdurch wird insbesondere eine Lebensdauer der Federringscheibe signifikant verlängert.

Vorzugsweise weisen die Federstege in Radialrichtung der Federringscheibe eine konstante Breite auf. Hierdurch werden insbesondere übermässige Belastungen an den Federstegen vermieden.

Die erfindungsgemäße Vorspannvorrichtung kann dabei sowohl am stationären Gleitring als auch am rotierenden Gleitring verwendet werden. Gegebenenfalls kann die Vorspannvorrichtung auch an beiden Gleitringen gleichzeitig eingesetzt werden.

Weiter bevorzugt befindet sich die Vorspannvorrichtung in direktem Kontakt mit dem Gleitring. Hierdurch kann auf einen zwischengeschalteten Druckübertragungsring oder dgl. verzichtet werden.

Die erfindungsgemäße Federringscheibe ist vorzugsweise als geschlossener Ring ausgebildet. Die Federstege sind bevorzugt an einem Innenumfang der Federringscheibe vorgesehen.

Für einen besonders sicheren Eingriff mit dem Gleitring sind die Eingriffsbereiche der Federstege bevorzugt abgewinkelt, vorzugsweise um einen Winkel von ca. 90°. Somit verlaufen die Eingriffsbereiche im wesentlichen in axialer Richtung. Hierdurch kann ferner eine unerwünschte Mitnahme des stationären Gleitrings durch die Rotation des rotierenden Gleitrings sicher und einfach verhindert werden.

Weiter bevorzugt weisen die Eingriffsbereiche der Federstege eine zusätzliche Umbiegung eines letzten Endes der Eingriffsbereiche auf. Dadurch kann eine zusätzliche Versteifung des freien Endes der Eingriffsbereiche erreicht werden. Weiter bevorzugt liegt der Eingriffsbereich mit der zusätzlichen Umbiegung an einem Wandbereich der Ausnehmung an Hierdurch kann insbesondere eine Fixierung der Federstege und somit der Federringscheibe relativ zum Gleitring, welcher die Ausnehmung aufweist, erreicht werden.

Vorzugsweise sind die Federstege mit den Eingriffsbereichen derart gebildet, dass eine durch die Ausnehmung am Gleitring gebildete Kante ohne Kontakt mit einem Teil der Federringscheibe ist. Hierdurch wird eine Beschädigung der Kante während des Betriebes der Gleitringdichtungsanordnung vermieden, da kein Kontakt zwischen der Kante und Teilen der Federringscheibe vorhanden ist.

Weiterhin sind in der Federringscheibe vorzugsweise mehrere Öffnungen zur Durchführung eines Befestigungselements wie beispielsweise einer Schraube oder dgl. vorgesehen. Auch ist es bevorzugt möglich, dass der Eingriffsbereich am Ende des Federstegs in Richtung zur Mitte der Federringscheibe verdreht ist, vorzugsweise um ca. 90°.

Nachfolgend wird unter Bezugnahme auf die begleitende Zeichnung ein bevorzugtes Ausführungsbeispiel der Erfindung im Detail beschrieben. Hierbei zeigt:
- Fig. 1: eine schematische Schnittansicht einer Gleitringdichtungsanordnung,
- Fig. 2: eine schematische Draufsicht auf eine Federringscheibe von Fig. 1,
- Fig. 3: eine schematische, perspektivische Teil-Ansicht der Federringscheibe von Fig. 2,
- Fig. 4: eine schematische Seitenansicht eines Gleitringes mit Teilen der Federringscheibe von Fig. 1,
- Fig. 5: eine schematische Darstellung eines Teiles einer Gleitringdichtungsanordnung, und
- Fig. 6: eine schematische Draufsicht einer Federringscheibe gemäß einem Ausführungsbeispiel der Erfindung.

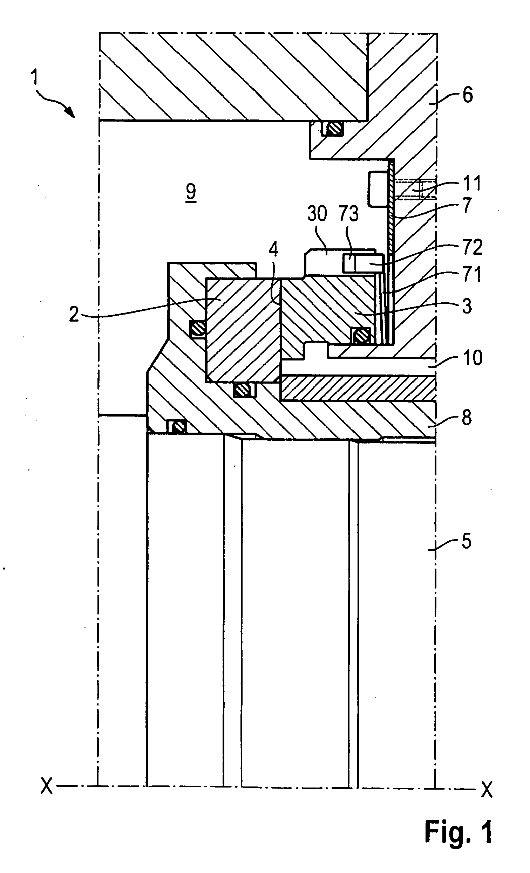

Die in den Fig. 1 bis 4 gezeigte Gleitringdichtungsanordnung 1 umfasst einen rotierenden Gleitring 2 und einen stationären Gleitring 3, welche zwischen sich einen Dichtspalt 4 definieren. Die Gleitringe dichten hierbei beispielsweise einen Produktbereich 9 von einem Atmosphärenbereich 10 ab. Der rotierende Gleitring 2 ist dabei über eine an einer rotierenden Welle 5 montierten Wellenbuchse 8 gehalten, welche die Rotation der Welle 5 auf den rotierenden Gleitring 2 überträgt. Der stationäre Gleitring 3 ist an einem stationären Bauteil 6 angeordnet und ist axial beweglich vorgesehen. Hierbei wird der stationäre Gleitring 3 mittels einer Federringscheibe 7 als Vorspannvorrichtung in axialer Richtung X-X gegen den rotierenden Gleitring 2 vorgespannt.

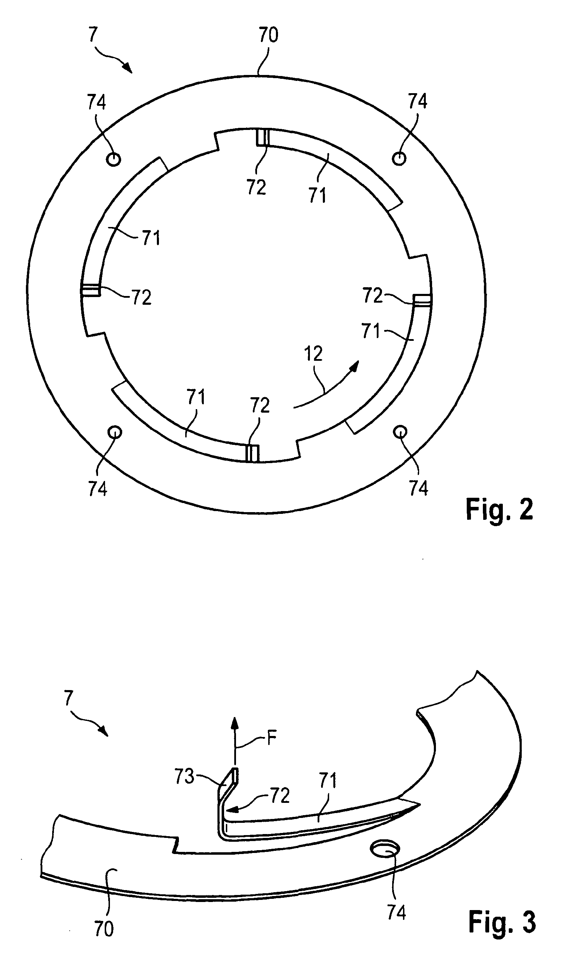

Die Federringscheibe 7 ist im Detail in den Fig. 2, 3 und 4 dargestellt und umfasst einen geschlossenen ringförmigen Basiskörper 70, an dessen Innenumfang mehrere Federstege 71 angeordnet ist. In diesem Ausführungsbeispiel sind vier Federstege 71 vorgesehen. Die Federstege 71 sind einstückig mit dem Basiskörper 70 gebildet und weisen an ihren freien Enden jeweils einen Eingriffsbereich 72 auf. Wie aus Fig. 1 ersichtlich ist, greift der Eingriffsbereich 72 in eine an einem Außenumfang des stationären Gleitrings 3 vorgesehene Ausnehmung 30 ein. Hierbei kann eine formschlüssige Verbindung zwischen dem Eingriffsbereich 72 und der Ausnehmung 30 vorgesehen sein. Die Ausnehmung 30 ist als in axialer Richtung X-X durchgehende Nut vorgesehen. Die Federstege 71 und die Eingriffsbereiche 72 weisen in Umfangsrichtung eine konstante Breite auf.

Die Federringscheibe 7 ist mittels mehrerer Schauben 11 am stationären Bauteil 6 befestigt. Hierzu sind Durchgangsöffnungen 74 im Basiskörper 70 gebildet. Die Federringscheibe 7 ist vorzugsweise aus einem Federstahl hergestellt, wobei die Federringscheibe 7 bevorzugt als Stanz-Biege-Bauteil hergestellt ist. Hierbei können in einem Schritt die Federstege 71 aus dem ringförmigen Basiskörper 70 gestanzt werden und anschließend werden die freien Enden der Federstege 71 umgebogen, um die Eingriffsbereiche 72 zu bilden. Die Ausstanzung des Federstegs 71 aus Federstahl kann somit eine in axialer Richtung X-X wirkende Vorspannkraft F auf den stationären Gleitring 3 bewirken. Wie aus Fig. 3 ersichtlich ist, kann dabei eine Umbiegung um 90° und zusätzlich auch eine zweite Umbiegung 73 des letzten Endes des Eingriffsbereichs 72 erfolgen. Somit können die Federstege und die Eingriffsbereiche aus dem ringförmigen Basiskörper 70 schnell und kostengünstig hergestellt werden.

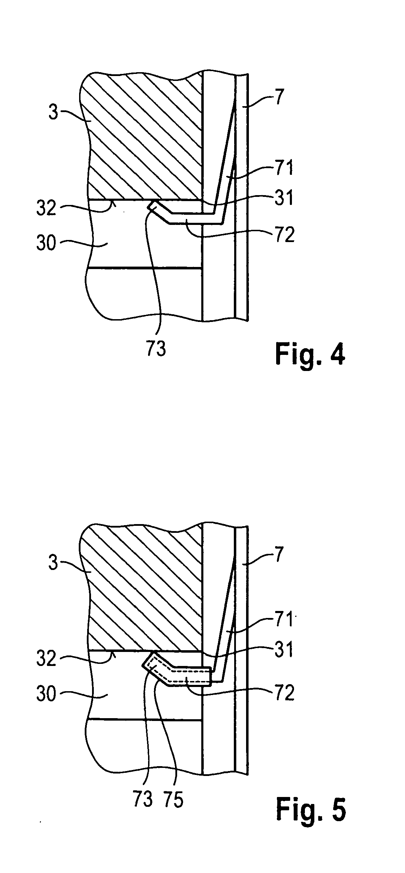

Durch die Abwinklung der Eingriffsbereiche 72 gegenüber den Federstegen 71 kann eine sichere Fixierung der Federscheibe am stationären Gleitring 3 erreicht werden. Dabei liegt die zweite Umbiegung 73 des letzten Endes des Eingriffsbereichs 72 in axialer Richtung der Federscheibe gesehen schräg in der Nut 30 des stationären Gleitrings 3. Das Ende der zweiten Umbiegung 73 liegt dabei an einem Wandbereich 32 der Nut 30 an. Um eine Zentrierung des stationären Gleitrings 3 nicht zu beeinträchtigen, ist in radialer Richtung ein Abstand zu einer Bodenfläche der Nut 30 vorhanden (vgl. Fig. 1). Auch berühren die Federstege und Eingriffsbereiche keine Kanten 31 der Nut 30 (vgl. Fig. 4). Hierdurch kann insbesondere ein Abplatzen von Material an den Kanten 31 des stationären Gleitrings 3 verhindert werden, wie dies bei den im Stand der Technik verwendeten Lösungen mittels eines Stiftes vorkommen kann. Weiterhin kann dadurch eine Krafteinleitung von der Federringscheibe 7 auf den stationären Gleitring 3 in axialer Richtung X-X ungefähr mittig in der Nut erfolgen. Wie aus Fig. 2 ersichtlich ist, sind ferner die an den Enden der Federstege 71 vorgesehenen Eingriffsbereiche 72 alle in eine gleiche Umfangsrichtung 12 der Federringscheibe 7 gerichtet. Die Federstege 71 sind dabei in jeweils gleichen Abständen in Umfangsrichtung angeordnet.

Die Federstege 71 üben somit über die Eingriffsbereiche 72 eine Vorspannkraft F in axialer Richtung X-X auf den stationären Gleitring 3 aus. In diesem Ausführungsbeispiel weisen die Federstege 71 eine jeweils gleiche Breite in radialer Richtung der Federringscheibe 7 und auch eine gleiche Länge in Umfangsrichtung auf. Um jeweils andere Federkonstanten der Federstege 71 bereitzustellen, kann jedoch eine Variation der Umfangslänge und/oder der Breite in radialer Richtung der Federstege vorgenommen werden. Ferner ist es auch möglich, eine Beschichtung der Federstege vorzusehen oder zusätzliche Knicke in die Federstege 71 einzubringen. Hierbei kann eine beliebige Kombination der beschriebenen Maßnahmen vorgenommen werden, um unterschiedliche Federkonstanten der Federstege bereitzustellen.

Es sei ferner angemerkt, dass die erfindungsgemäße Federringscheibe 7 auch am rotierenden Gleitring 2 verwendet werden kann, wobei insbesondere auch noch eine Drehmomentübertragungsfunktion von der Welle 5 auf den rotierenden Gleitring 2 über die Federringscheibe 7 möglich ist.

Fig. 5 zeigt eine Federringscheibe 7, welche im wesentlichen dem ersten Ausführungsbeispiel entspricht. Wie aus Fig. 5 ersichtlich ist, ist beim zweiten Ausführungsbeispiel zusätzlich ein Schutzüberzug 75 über dem freien Ende des Eingriffsbereiches 72 angeordnet. Der Schutzüberzug 75 überdeckt dabei sowohl die zweite Umbiegung 73 als auch den in axialer Richtung verlaufenden Bereich des Eingriffsbereiches 72. Der Schutzüberzug ist vorzugsweise aus Kunststoff und verhindert, dass sich eine scharfe Endkante an der zweiten Umbiegung 73 in eine Wand 32 der Nut während des Betriebes eingräbt. Hierdurch werden Beschädigungen am stationären Gleitring 3 vermieden, und es kann über die gesamte Lebensdauer der Federringscheibe 7 eine konstante Vorspannkraft eingebracht werden. Der Schutzüberzug 75 wird vorzugsweise an das freie Ende des Eingriffsbereiches 72 angespritzt. Somit kann auf einfache und kostengünstige Weise ein Verschleissschutz bereitgestellt werden.

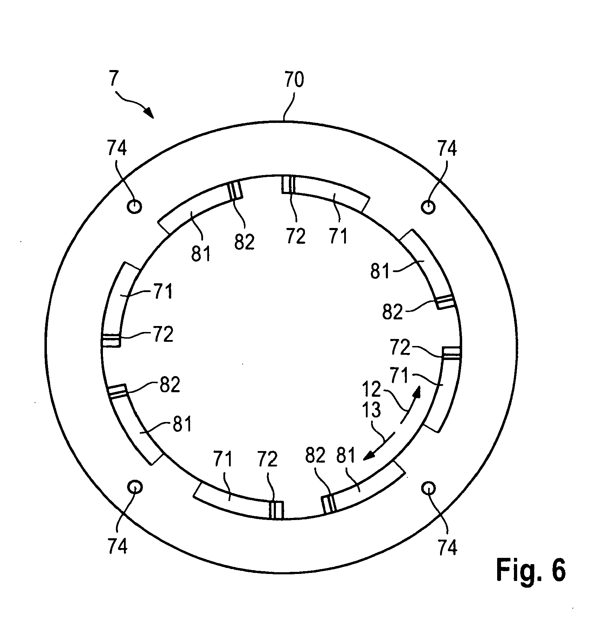

Fig. 6 zeigt eine Federringscheibe 7 gemäß der Erfindung, wobei gleiche bzw. funktional gleiche Teile mit den gleichen Bezugszeichen wie im ersten Ausführungsbeispiel bezeichnet sind. Im Unterschied zum ersten Ausführungsbeispiel ist beim dritten Ausführungsbeispiel eine erste Gruppe von Federstegen 71 und eine zweite Gruppe von Federstegen 81 vorgesehen. Die erste Gruppe von Federstegen 71 und Eingriffsbereichen 72 ist dabei in eine erste Umfangsrichtung 12 gerichtet. Die zweite Gruppe von Federstegen 81 mit Eingriffsbereichen 82 ist in eine zweite Umfangsrichtung 13, entgegengesetzt zur ersten Umfangsrichtung 12, gerichtet. Durch diese Ausgestaltung der Federringscheibe 7 kann diese insbesondere bei Anwendungen eingesetzt werden, bei denen ein rotierendes Bauteil wie z.B. eine Welle in zwei unterschiedlichen Drehrichtungen betrieben wird. Durch die beiden Gruppen von Federstegen 71, 81 kann dabei insbesondere eine Relativbewegung zwischen der Federringscheibe 7 und dem stationären Gleitring während einer Richtungsumkehr des rotierenden Bauteils vermieden werden, da bei einer Richtungsumkehr des rotierenden Bauteils der rotierende Gleitring ein Drehmoment auf den stationären Gleitring ausübt. Die zweite Gruppe von Federstegen 81 verhindert dabei eine Mitnahme des stationären Gleitrings in der umgekehrten Drehrichtung, wobei insbesondere auch Abplatzungen oder andere Beschädigungen am stationären Gleitring vermieden werden können.

### Bezugszeichenliste

- 1: Gleitringdichtungsanordnung
- 2: rotierender Gleitring
- 3: stationärer Gleitring
- 4: Dichtspalt
- 5: Welle
- 6: stationäres Bauteil
- 7: Federringscheibe
- 8: Wellenbuchse
- 9: Produktbereich
- 10: Atmosphärenbereich
- 11: Schrauben
- 12: erste Umfangsrichtung
- 13: zweite Umfangsrichtung
- 30: Ausnehmung
- 31: Kante
- 32: Wand
- 70: ringförmiger Basiskörper
- 71: Federstege
- 72: Eingriffsbereich
- 73: zweite Umbiegung
- 74: Durchgangsöffnung
- 75: Schutzüberzug
- 81: Federstege
- 82: Eingriffsbereich
- F: Vorspannkraft
- X-X: axiale Richtung

## Patentansprüche

1. Gleitringdichtungsanordnung, umfassend:
- einen rotierenden Gleitring (2),
- einen stationären Gleitring (3), und
- eine Vorspannvorrichtung zur Vorspannung wenigstens eines der Gleitringe,
- wobei die Vorspannvorrichtung eine Federringscheibe (7) mit einem Basiskörper (70), wenigstens einem Federsteg (71) und wenigstens einem am Ende des Federstegs (71) vorgesehenen Eingriffsbereich (72) umfasst,
- wobei die Federstege (71) in Umfangsrichtung der Federringscheibe (7) verlaufen, und
- wobei sich der Eingriffsbereich (72) mit einer am Gleitring vorgesehenen Ausnehmung (30) in Eingriff befindet, um eine in Axialrichtung (X-X) wirkende Vorspannkraft (F) auf den Gleitring auszuüben,
**dadurch gekennzeichnet, dass** die Federringscheibe (7) eine erste Gruppe von Federstegen (71) mit Eingriffsbereichen (72) umfasst, welche in eine erste Umfangsrichtung (12) der Federringscheibe (7) gerichtet sind, und eine zweite Gruppe von Federstegen (81) mit Eingriffsbereichen (82) umfasst, welche in eine zweite Umfangsrichtung (13) gerichtet sind.

2. Gleitringdichtungsanordnung nach Anspruch 1, **dadurch gekennzeichnet, dass** die Federringscheibe (7) einstückig, vorzugsweise als Stanz-Biege-Bauteil vorgesehen ist.

3. Gleitringdichtungsanordnung nach einem der vorhergehenden Ansprüche, **dadurch gekennzeichnet, dass** die Ausnehmung (30) an einem Außenumfang des Gleitrings gebildet ist, vorzugsweise als in Axialrichtung (X-X) verlaufende Nut.

4. Gleitringdichtungsanordnung nach einem der vorhergehenden Ansprüche, **gekennzeichnet durch** eine Vielzahl von Federstegen (71) mit jeweils einem Eingriffsbereich (72).

5. Gleitringdichtungsanordnung nach einem der vorhergehenden Ansprüche, **dadurch gekennzeichnet, dass** der Federsteg (71) eine gestufte Federwirkung bereitstellt.

6. Gleitringdichtungsanordnung nach einem der vorhergehenden Ansprüche, **gekennzeichnet durch** einen Formschluss zwischen dem Eingriffsbereich (72) und der Ausnehmung (30) im Gleitring.

7. Gleitringdichtungsanordnung nach einem der vorhergehenden Ansprüche, **dadurch gekennzeichnet, dass** die in Umfangsrichtung verlaufenden Federstege (71) in Radialrichtung eine konstante Breite aufweisen.

8. Gleitringdichtungsanordnung nach einem der vorhergehenden Ansprüche, **dadurch gekennzeichnet, dass** die Federringscheibe (7) in direktem Kontakt mit dem Gleitring ist.

9. Gleitringdichtungsanordnung nach einem der vorhergehenden Ansprüche, **dadurch gekennzeichnet, dass** die Federstege (71) an einem Innenumfang der Federringscheibe (7) gebildet sind.

10. Gleitringdichtungsanordnung nach einem der vorhergehenden Ansprüche, **dadurch gekennzeichnet, dass** der Eingriffsbereich (72) vom Federsteg (71) abgewinkelt ist.

11. Gleitringdichtungsanordnung nach einem der vorhergehenden Ansprüche, **dadurch gekennzeichnet, dass** der Eingriffsbereich (72) eine zusätzliche Umbiegung (73) eines letzten Endes des Eingriffsbereichs aufweist.

12. Gleitringdichtungsanordnung nach Anspruch 11, **dadurch gekennzeichnet, dass** die zusätzliche Umbiegung (73) an einem Wandbereich der Ausnehmung (30) anliegt.

13. Gleitringdichtungsanordnung nach einem der vorhergehenden Ansprüche, **dadurch gekennzeichnet, dass** eine durch die Ausnehmung (30) am Gleitring gebildete Kante ohne Kontakt mit der Federringscheibe (7) ist.

## Claims

1. Slide ring seal arrangement, comprising:
- a rotating slide ring (2),
- a stationary slide ring (3), and
- a prestressing apparatus for prestressing at least one of the slide rings,
- the prestressing apparatus comprising a spring washer (7) with a main body (70), at least one spring bar (71) and at least one engagement region (72) which is provided at the end of the spring bar (71),
- the spring bars (71) running in the circumferential direction of the spring washer (7), and
- the engagement region (72) being in engagement with a recess (30) which is provided on the slide ring, in order to exert a prestressing force (F) which acts in the axial direction (X-X) on the slide ring,
**characterized in that** the spring washer (7) comprises a first group of spring bars (71) with engagement regions (72) which are directed in a first circumferential direction (12) of the spring washer (7), and comprises a second group of spring bars (81) with engagement regions (82) which are directed in a second circumferential direction (13).

2. Slide ring seal arrangement according to Claim 1, **characterized in that** the spring washer (7) is provided in one piece, preferably as a stamped bent component.

3. Slide ring seal arrangement according to either of the preceding claims, **characterized in that** the recess (30) is formed on an outer circumference of the slide ring, preferably as a groove which runs in the axial direction (X-X).

4. Slide ring seal arrangement according to one of the preceding claims, **characterized by** a multiplicity of spring bars (71) with in each case one engagement region (72).

5. Slide ring seal arrangement according to one of the preceding claims, **characterized in that** the spring bar (71) provides a graduated spring action.

6. Slide ring seal arrangement according to one of the preceding claims, **characterized by** a positively locking connection between the engagement region (72) and the recess (30) in the slide ring.

7. Slide ring seal arrangement according to one of the preceding claims, **characterized in that** the spring bars (71) which run in the circumferential direction have a constant width in the radial direction.

8. Slide ring seal arrangement according to one of the preceding claims, **characterized in that** the spring washer (7) is in direct contact with the slide ring.

9. Slide ring seal arrangement according to one of the preceding claims, **characterized in that** the spring bars (71) are formed on an inner circumference of the spring washer (7).

10. Slide ring seal arrangement according to one of the preceding claims, **characterized in that** the engagement region (72) is angled away from the spring bar (71).

11. Slide ring seal arrangement according to one of the preceding claims, **characterized in that** the engagement region (72) has an additional bend (73) of a last end of the engagement region.

12. Slide ring seal arrangement according to Claim 11, **characterized in that** the additional bend (73) bears against a wall region of the recess (30).

13. Slide ring seal arrangement according to one of the preceding claims, **characterized in that** an edge which is formed by the recess (30) on the slide ring is not in contact with the spring washer (7).

## Revendications

1. Ensemble d'étanchéité à bague de glissement, comprenant :
- une bague de glissement rotative (2),
- une bague de glissement stationnaire (3), et
- un dispositif de précontrainte pour la précontrainte d'au moins l'une des bagues de glissement,
- le dispositif de précontrainte comprenant une rondelle élastique (7) avec un corps de base (70), au moins une nervure élastique (71) et au moins une région d'engagement (72) prévue à l'extrémité de la nervure élastique (71),
- les nervures élastiques (71) s'étendant dans la direction périphérique de la rondelle élastique (7), et
- la région d'engagement (72) étant en prise avec un évidement (30) prévu sur la bague de glissement, afin d'exercer sur la bague de glissement une force de précontrainte (F) agissant dans la direction axiale (X-X),
**caractérisé en ce que** le la rondelle élastique (7) comprend un premier groupe de nervures élastiques (71) avec des régions d'engagement (72) qui sont orientées dans une première direction périphérique (12) de la rondelle élastique (7), et un deuxième groupe de nervures élastiques (81) avec des régions d'engagement (82) qui sont orientées dans une deuxième direction périphérique (13).

2. Ensemble d'étanchéité à bague de glissement selon la revendication 1, **caractérisé en ce que** la rondelle élastique (7) est réalisée d'une seule pièce, de préférence sous forme de pièce estampée-cintrée.

3. Ensemble d'étanchéité à bague de glissement selon l'une quelconque des revendications précédentes, **caractérisé en ce que** l'évidement (30) est formé au niveau d'une périphérie extérieure de la bague de glissement, de préférence sous forme de rainure s'étendant dans la direction axiale (X-X).

4. Ensemble d'étanchéité à bague de glissement selon l'une quelconque des revendications précédentes, **caractérisé par** une pluralité de nervures élastiques (71) ayant chacune une région d'engagement (72).

5. Ensemble d'étanchéité à bague de glissement selon l'une quelconque des revendications précédentes, **caractérisé en ce que** la nervure élastique (71) fournit un effet de ressort étagé.

6. Ensemble d'étanchéité à bague de glissement selon l'une quelconque des revendications précédentes, **caractérisé par** un engagement positif entre la région d'engagement (72) et l'évidement (30) dans la bague de glissement.

7. Ensemble d'étanchéité à bague de glissement selon l'une quelconque des revendications précédentes, **caractérisé en ce que** les nervures élastiques (71) s'étendant dans la direction périphérique présentent une largeur constante dans la direction radiale.

8. Ensemble d'étanchéité à bague de glissement selon l'une quelconque des revendications précédentes, **caractérisé en ce que** la rondelle élastique (7) est en contact direct avec la bague de glissement.

9. Ensemble d'étanchéité à bague de glissement selon l'une quelconque des revendications précédentes, **caractérisé en ce que** les nervures élastiques (71) sont formées sur une périphérie intérieure de la rondelle élastique (7).

10. Ensemble d'étanchéité à bague de glissement selon l'une quelconque des revendications précédentes, **caractérisé en ce que** la région d'engagement (72) est coudée depuis la nervure élastique (71).

11. Ensemble d'étanchéité à bague de glissement selon l'une quelconque des revendications précédentes, **caractérisé en ce que** la région d'engagement (72) présente une courbure supplémentaire (73) d'une dernière extrémité de la région d'engagement.

12. Ensemble d'étanchéité à bague de glissement selon la revendication 11, **caractérisé en ce que** la courbure supplémentaire (73) s'applique contre une région de paroi de l'évidement (30).

13. Ensemble d'étanchéité à bague de glissement selon l'une quelconque des revendications précédentes, **caractérisé en ce qu'**une arête formée par l'évidement (30) sur la bague de glissement n'est pas en contact avec la rondelle élastique (7).
